# EUROPÄISCHE PATENTSCHRIFT

(11) **EP 1 866 562 B1**
(45) Veröffentlichungstag und Bekanntmachung des Hinweises auf die Patenterteilung: **30.03.2011**
(21) Anmeldenummer: 06707316.3
(22) Anmeldetag: 28.02.2006
(51) Int. Cl.: F16K 27/00, F16K 31/06, F15B 13/00

(54) **ELEKTRISCH BETÄTIGBARES VENTIL**
ELECTRICALLY CONTROLLABLE VALVE
SOUPAPE A COMMANDE ELECTRIQUE

(30) Priorität: 07.04.2005 DE 202005005908 U
(43) Veröffentlichungstag der Anmeldung: 19.12.2007
(73) Patentinhaber: FESTO AG & Co. KG, 73734 Esslingen (DE)
(72) Erfinder: KEES, Ulrich, 66424 Homburg (DE)
(74) Vertreter: Abel, Martin
(86) Internationale Anmeldenummer: PCT/EP2006/001808
(87) Internationale Veröffentlichungsnummer: WO 2006/105830

(56) Entgegenhaltungen:
- EP-A- 1 477 715
- DE-A1- 19 920 959
- US-A- 3 582 006
- US-A- 5 181 692
- US-A1- 2003 226 606
- US-A1- 2004 089 837

## Beschreibung

Die Erfindung betrifft ein elektrisch betätigbares Ventil, insbesondere Magnetventil, mit einem mindestens ein bewegliches Steuerglied mit zugeordneter elektrischer Antriebseinrichtung aufweisenden Ventilkopf, der an eine von Basiskanälen durchsetzte Ventilbasis angesetzt und daran durch Befestigungsmittel fixiert ist.

Ein aus der EP-A-1 477 715 B1 bekanntes Ventil dieser Art ist als Klappankerventil mit elektromagnetischer Antriebseinrichtung ausgebildet. Die Antriebseinrichtung sitzt zusammen mit einem als Klappanker ausgebildeten Steuerglied in einem Ventilkopf, der an eine Ventilbasis angesetzt und mit dieser verschraubt ist. Die Ventilbasis durchsetzende Basiskanäle kommunizieren mit Kanälen des Ventilkopfes und können durch gesteuerte Aktivierung des Steuergliedes in unterschiedlicher Weise selektiv miteinander verschaltet werden.

Die für die Schraubverbindung zwischen Ventilkopf und Ventilbasis erforderlichen Maßnahmen haben seitens des Ventilkopfes einen relativ hohen Raumbedarf zur Folge. Dies behindert eine Verringerung der Gesamtabmessungen des Ventils.

Aus der DE 199 20 959 A1, der DE 35 04 550 A1, der DE 87 04 132 U1 und der DE 698 09 177 T2 gehen Magnetventile mit alternativen Befestigungsmöglichkeiten hervor.

Die US-A-5 181 692 offenbart ein Ventil, bei dem ein Ventilgehäuse an eine Basisplatte angesetzt und mittels eines Haltebügels fixiert ist, der die Basisplatte von unten her übergreift und mit seinen seitlichen Armen in das Ventilgehäuse eingreift.

Die US 3 688 797 beschreibt eine schraubenlose Befestigung einer Ventilabdeckung an einer Grundplatte. Dabei kommen mehrere entlang des Umfanges der Ventilabdeckung platzierte Klammern zum Einsatz, die seitens der Ventilabdeckung jeweils eine spezielle Kontur benötigen, um sicher verrastbar zu sein.

Auch im Falle der JP 4-90702 U und der JP 62-20274 U werden aneinandergesetzte Ventilkomponenten durch mehrere über den Umfang verteilte federnde Halteklammern aneinander fixiert. Zur kopfseitigen Verankerung der Halteklammern ist eine spezielle Nutenstruktur notwendig, die den Raumbedarf und den Herstellungsaufwand vergrößert.

Eine Aufgabe der vorliegenden Erfindung besteht darin, bei einem Ventil der eingangs genannten Art die Maßnahmen zur Befestigung des Ventilkopfes an der Ventilbasis unter anderem hinsichtlich des Raumbedarfes zu optimieren.

Zur Lösung dieser Aufgabe ist vorgesehen, dass die Befestigungsmittel mindestens einen U-förmigen Haltebügel aufweisen, der den Ventilkopf von der der Ventilbasis entgegengesetzten Oberseite her reiterartig übergreift, wobei seine sich seitlich am Ventilkopf vorbei erstreckenden Bügelschenkel endseitig unter Vermittlung von bezüglich dem Haltebügel gesonderten Spannelementen unter Zugvorspannung an der Ventilbasis verankert sind, wobei die Spannelemente an der Ventilbasis abgestützt sind und die Endabschnitte der Bügelschenkel beaufschlagen.

Derartige Befestigungsmaßnahmen erlauben einen Verzicht auf eine Schraubverbindung zwischen Ventilkopf und Ventilbasis und ermöglichen es daher, das Bauvolumen des Ventilkopfes ohne Berücksichtigung bisher notwendiger Schraubendurchgangskanäle für die eigentliche Ventiltechnik zu nutzen und sehr gering zu halten. Gleichzeitig wird der Ventilkopf durch den mindestens einen ihn umschließenden Haltebügel sicher an der Ventilbasis verankert und mit dieser verspannt. Durch eine entsprechend große Bügelbreite kann eine hohe Vorspannung zwischen Ventilkopf und Ventilbasis bei gleichzeitig sehr geringer Flächenpressung und folglich geringer Materialbeanspruchung erzielt werden. Der Haltebügel ist an seinen beiden Bügelschenkeln unter Vermittlung von bezüglich dem Haltebügel gesonderten Spannelementen an der Ventilbasis verankert. Diese Spannelemente stützen sich einerseits an der Ventilbasis ab und beaufschlagen andererseits die Endabschnitte der Bügelschenkel so, dass die Bügelschenkel und mithin der gesamte Haltebügel in Richtung zur Ventilbasis gezogen wird und dabei den darunter liegenden Ventilkopf fest mit der Ventilbasis verspannt.

Vorteilhafte Weiterbildungen der Erfindung gehen aus den Unteransprüchen hervor.

Es besteht die Möglichkeit, den Ventilkopf mit nur einem Haltebügel an der Ventilbasis zu befestigen, wobei dieser Haltebügel dann zweckmäßigerweise längsmittig am Ventilkopf platziert ist, so dass sich eine symmetrische Krafteinleitung ergibt.

Eine besonders geringe Flächenpressung und folglich auch nur geringe Beanspruchung der Komponenten des Ventilkopfes ergibt sich, wenn der Haltebügel bandartig breit mit flacher Gestalt ausgeführt ist. Erreicht wird dadurch auch, dass die Befestigungsmaßnahmen an dem Ventilkopf nicht oder nur unwesentlich auftragen und eine relativ glatte Außenfläche des Ventilkopfes zulassen.

Die Installation des Haltebügels wird erleichtert, wenn seine Bügelschenkel quer zu ihrer Längsrichtung aufeinander zu und voneinander weg federelastisch biegbar sind. Als Material empfiehlt sich vor allem Metall, insbesondere Federstahl.

Um einem unbeabsichtigten Verrutschen oder Verkanten des Haltebügels bei der Installation entgegenzuwirken, kann am Ventilkopf eine sich entlang der oberen und den beiden seitlichen Außenflächen erstreckende Zentriervertiefung vorgesehen sein, in der der Haltebügel aufgenommen ist.

Bei den Spannelementen handelt es sich zweckmäßigerweise um Stäbe, von denen je einer einem der Endabschnitte der Bügelschenkel zugeordnet ist. Jeder Stab ist so an der Ventilbasis platziert, dass er mindestens eine an dieser vorgesehene Abstützfläche untergreift und gleichzeitig mindestens eine am Endabschnitt des zugeordneten Bügelschenkels vorgesehene Beaufschlagungsfläche übergreift.

Die Stäbe werden vorzugsweise durch Steckmontage installiert. Dabei kann es sich um einzelne, nicht miteinander verbundene Stabelemente handeln. Die Handhabung wird jedoch sehr erleichtert, wenn ein U-förmiger Spannbügel vorgesehen ist, dessen beiden Schenkel jeweils einen der Stäbe bilden.

Zur Definition der Beaufschlagungsflächen sind die Endabschnitte der Bügelschenkel des Haltebügels zweckmäßigerweise ein oder mehrfach abgewinkelt. Besonders zweckmäßig ist eine U-förmig abgewinkelte Kontur, wobei die Beaufschlagungsflächen von der quer verlaufenden U-Basis gebildet sind.

Um einen Toleranzausgleich zu ermöglichen, sind die Endabschnitte der Bügelschenkel im Bereich ihrer Beaufschlagungsflächen zweckmäßigerweise jeweils mit mehreren nach oben ausgestellten lokalen Erhebungen versehen, die von den stabartigen Spannelementen längsseits beaufschlagt werden und die in gewissem Rahmen eine Verformung zulassen.

Die an der Ventilbasis vorgesehenen Abstützflächen und die mit diesen zusammenwirkenden seitenflächen der Stäbe sind zweckmäßigerweise eben ausgebildet, wobei ihre Ausdehnungsebene rechtwinkelig zur Längsrichtung der Bügelschenkel verläuft. Auf diese Weise ist eine großflächige Kraftübertragung zwischen den Spannelementen und der Ventilbasis gewährleistet, was die spezifische Beanspruchung auf einem niedrigen Niveau hält. Die Stäbe sind in diesem Zusammenhang zweckmäßigerweise mit rechteckigem Querschnitt ausgeführt.

Bei einer besonders vorteilhaften konstruktiven Ausgestaltung sind jedem Bügelschenkel an der Ventilbasis zwei zueinander koaxiale Aufnahmekanäle zugeordnet, die durch eine Ausnehmung voneinander getrennt sind. Der die Beaufschlagungsfläche aufweisende Endabschnitt des jeweiligen Bügelschenkels taucht in die Ausnehmung ein und wird von einem stabartigen Spannelement übergriffen, das unter Überbrückung der Ausnehmung in die koaxialen Aufnahmekanäle eingesteckt ist.

Der Haltebügel kann bei Bedarf als Beschriftungsträger ausgebildet sein und beispielsweise die Typenbezeichnungen des jeweiligen Ventils tragen. Selbige kann vor der Installation auf den Haltebügel aufgebracht werden, beispielsweise durch Aufdrucken oder Einprägen, so dass nach dem Zusammenbau des Ventils ein gesonderter Beschriftungsvorgang entfallen kann.

Vor allem wenn der Haltebügel aus Metall besteht, kann er auch als Element zur verbesserten Wärmeabfuhr an die Umgebung dienen. Diese Wärmeabfuhrwirkung ist besonders gut bei einem bandartigen, breiten Haltebügel aufgrund der hier großen Außenfläche.

Das Ventil kann eine Handbetätigungseinrichtung aufweisen, mit der es sich auch ohne elektrische Energie manuell betätigen lässt. Diese Handbetätigungseinrichtung verfügt zweckmäßigerweise über einen im Bereich der Oberseite des Ventilkopfes untergebrachten Betätigungsknopf, der mit einem Finger oder einem gesonderten Werkzeug gedrückt und/oder verdreht werden kann. Dieser Betätigungsknopf ist zweckmäßigerweise von dem Haltebügel übergriffen und kann sich an diesem Haltebügel von innen her abstützen. Um trotz dieser Rückhaltefunktion die Betätigung zu gewährleisten, besitzt der Haltebügel eine über dem Betätigungsknopf angeordnete Durchbrechung, deren Querschnitt kleiner als derjenige des Betätigungsknopfes ist.

In Verbindung mit einer Ausgestaltung als Klappankerventil repräsentiert das Steuerglied zweckmäßigerweise das als Klappanker ausgeführte Ventilglied, welches in einer Steuerkammer im Innern des Ventilkopfes im Bereich dessen Oberseite aufgenommen ist. Dabei ist von Vorteil, wenn der Ventilkopf ein auf der Ventilbasis sitzendes Unterteil und ein darauf sitzendes, haubenartiges Oberteil aufweist, wobei das Oberteil ein gemeinsam mit dem Unterteil die Ventilkammer definierendes Einsatzteil umschließt. Die Verwendung des Einsatzteiles gestattet eine Minimierung des Volumens der Ventilkammer und folglich des Luftverbrauches. Gleichzeitig ist in Verbindung mit dem Einsatzteil eine Optimierung der fluidkanaltechnischen Ausstattung im Innern des Ventilkopfes möglich.

Das Ventil kann insgesamt als eigenständiges Steuerventil oder als Vorsteuerventil eingesetzt werden. Durch Variation der Ausgestaltung der Ventilbasis kann sehr leicht eine Anpassung an die jeweiligen Anforderungen erfolgen. Auch eine batterieartige Anordnung mehrerer Ventile ist möglich.

Nachfolgend wird die Erfindung anhand der beiliegenden Zeichnung näher erläutert. In dieser zeigen:
- Figur 1: eine bevorzugte Ausführungsform des erfindungsgemä- ßen Ventils in einer perspektivischen Darstellung bei noch nicht installierten Spannelementen,
- Figur 2: den Ventilkopf des in Figur 1 gezeigten Ventils in einer Unteransicht bei bereits aufgesetztem Halte- bügel,
- Figur 3: einen im Bereich der Ventilbasis abgestuften Längs- schnitt durch das Ventil gemäß Schnittlinie III-III aus Figuren 1 und 4,
- Figur 4: das Ventil in einem Querschnitt gemäß Schnittlinie IV-IV aus Figuren 1 und 3, wobei oberhalb des Ven- tilkopfes der Endabschnitt eines zur Betätigung der Handbetätigungseinrichtung geeigneten Betätigungs- werkzeuges angedeutet ist, und
- Figur 5: einen Horizontalschnitt durch das Ventil in einer unmittelbar oberhalb den Spannelementen liegenden Ebene gemäß Schnittlinie V-V aus Figur 4.

Das in seiner Gesamtheit mit Bezugsziffer 1 bezeichnete Ventil ist hauptsächlich für elektrische Betätigung ausgelegt und beim Ausführungsbeispiel als sogenanntes Klappankerventil konzipiert.

Das Ventil 1 enthält einen Ventilkopf 9, der unter Abdichtung an eine Ventilbasis 10 angesetzt ist. Diejenige Komponente des Ventilkopfes 9, die direkt auf der Ventilbasis 10 sitzt, sei als Antriebsteil 2 bezeichnet. Eine als Steuerteil 4 bezeichnete weitere Komponente des Ventilkopfes 9 sitzt an der der Ventilbasis 10 entgegengesetzten Oberseite des Antriebsteils 2.

Orientierungsangaben wie "Oberseite", "Unterseite" etc. beziehen sich auf die beispielhafte, bevorzugte Ausrichtung des Ventils, wobei jedoch zu bemerken ist, dass die spätere Ausrichtung des Ventils 1 im Betrieb beliebig ist.

Das Antriebsteil 2 verfügt über ein bevorzugt aus Kunststoffmaterial bestehendes Antriebsteil-Gehäuse 7, in dem sich die insgesamt mit Bezugsziffer 3 bezeichnete elektrische Antriebseinrichtung des Ventils 1 befindet. Diese besitzt eine Elektromagneteinheit 8 mit einem bevorzugt E-förmig gestalteten Eisenkern 11, dessen Polflächen 12 im Bereich der Schnittstelle zum Steuerteil 4 liegen und diesem zugewandt sind. Die Schenkel der Elektromagneteinheit 8 und folglich auch die Polflächen 12 sind in der Längsrichtung 15 des Ventils 1 in Reihe aufeinanderfolgend angeordnet.

Die Elektromagneteinheit 8 enthält eine auf dem mittleren Schenkel des Eisenkerns 11 sitzende Spule 17. Sie steht mit aus dem Antriebsteil-Gehäuse 7 herausgeführten elektrischen Anschlusskontakten 16 in Verbindung, an die die zur Betätigung des Ventils erforderliche Betätigungsspannung anlegbar ist.

Die Elektromagneteinheit 8 ist zweckmäßigerweise ringsum formschlüssig in das Antreibsteil-Gehäuse 7 eingebettet, wobei sämtliche Zwischenräume vom Kunststoffmaterial des Antriebsteil-Gehäuses 7 ausgefüllt sind. Bei der Herstellung des Antriebsteils 2 wird die Elektromagneteinheit 8 zweckmäßigerweise mit dem das Antriebsteil-Gehäuse 7 bildenden Kunststoffmaterial umspritzt.

Das Steuerteil 4 verfügt über eine bevorzugt ebenfalls aus Kunststoffmaterial bestehende Abdeckhaube 18, die mit ihrer Haubenöffnung voraus an die Oberseite des Antriebsteils 2 angesetzt ist. Es kann sich um eine nur lose Steckverbindung handeln. Auch eine stoffschlüssige Verbindung ist möglich, beispielsweise eine eine gasdichte Verbindung bewirkende Laserschweißverbindung.

Die Abdeckhaube 18 umschließt ein bevorzugt ebenfalls aus Kunststoffmaterial bestehendes Einsatzteil 19 und drückt dieses gegen die an der Oberseite liegende Abschlussfläche 20 des Antriebsteils 2.

Das Einsatzteil 19 ist zweckmäßigerweise ebenfalls im wesentlichen haubenartig ausgebildet und besitzt einen zum Antriebsteil 2 hin offenen Hohlraum der gemeinsam mit dem Antriebsteil 2 eine als Steuerkammer 21 bezeichnete Kammer definiert. Diese hat längliche Gestalt und erstreckt sich in der Längsrichtung 15.

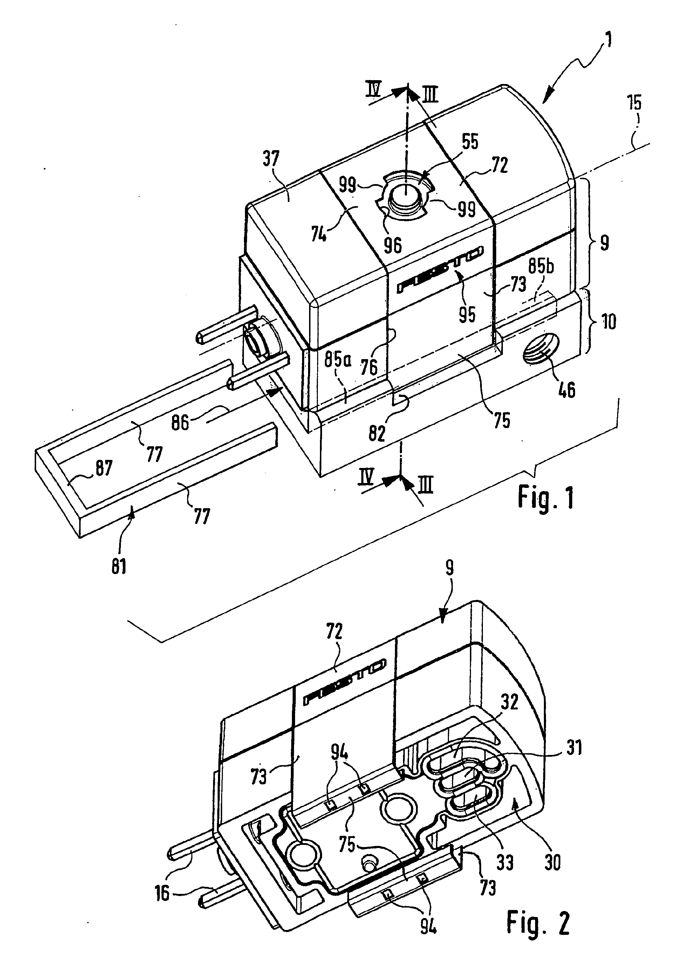

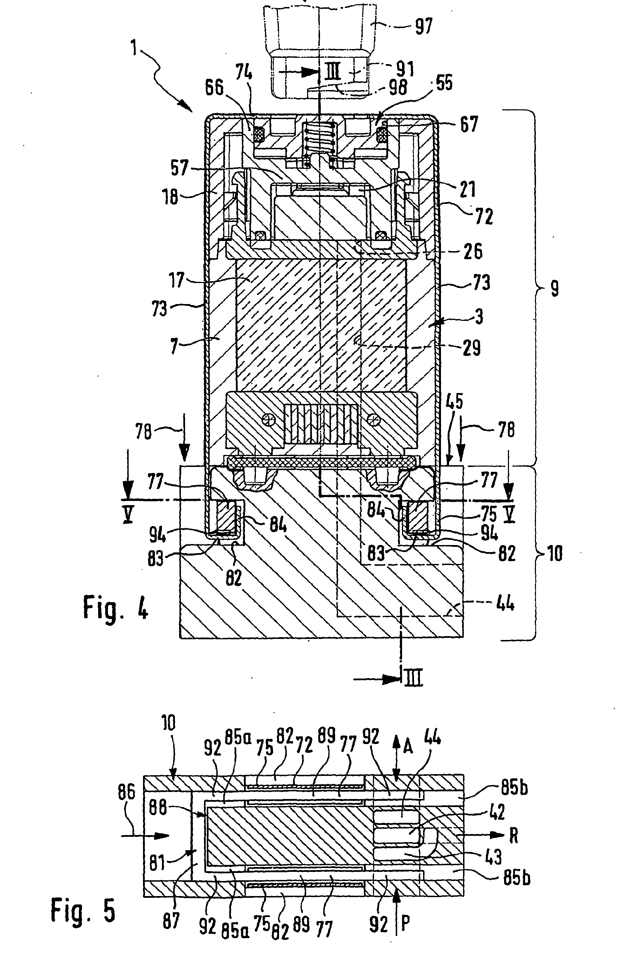

In die Steuerkammer 21 münden an einem ihrer Endbereiche eine am Antriebsteil 2 vorgesehene erste Ventilöffnung 22 und eine in der Höhenrichtung 13 des Ventils gegenüberliegend am Einsatzteil 19 vorgesehene zweite Ventilöffnung 23. Beide Ventilöffnungen 22, 23 sind von einem Ventilsitz umgeben. Eine ventilsitzlose dritte Ventilöffnung 26 mündet an einer in Figur 1 oberhalb der Schnittebene liegenden Stelle ebenfalls in die Steuerkammer 21 ein (Figur 4).

Bei den ersten, zweiten und dritten Ventilöffnungen 22, 23, 26 handelt es sich um die Mündungen eines ersten, zweiten und dritten Ventilkanals 27, 28, 29, die jeweils mit wenigstens einer Teillänge das Antriebsteil-Gehäuse 7 durchsetzen und mit einer ersten, zweiten bzw. dritten Anschlussöffnung 31, 32, 33 zu der der Ventilbasis 10 zugewandten Grundfläche 30 des Antriebsteils 2 ausmünden.

Der Ventilkopf 9 ist mit der Grundfläche 30 voraus unter Zwischenschaltung einer Dichtung 39 an die Ventilbasis 10 angesetzt. Letztere ist beim Ausführungsbeispiel ein im wesentlichen quaderförmiger Körper. In der Ventilbasis 10 verlaufen erste, zweite und dritte Basiskanäle 42, 43, 44, die einenends zu der das Antriebsteil 2 tragenden Bestückungsfläche 45 der Ventilbasis 10 ausmünden und dort unter Abdichtung zuordnungsrichtig mit den ersten, zweiten und dritten Anschlussöffnungen 31, 32, 33 kommunizieren. Andernends führen die Basiskanäle 42, 43, 44 zur Außenfläche der Ventilbasis 10, wo sie bei Bedarf mit Anschlussmitteln 46 ausgestattet sein können, die das lösbare Anschließen wegführender Fluidleitungen ermöglichen.

Beim Ausführungsbeispiel ist der erste Ventilkanal 27 ein Entlüftungskanal, der über den zugeordneten ersten Basiskanal 42 zur Atmosphäre ausmündet. An ihn kann bei Bedarf auch ein nicht dargestellter Schalldämpfer angeschlossen werden. Der zweite Ventilkanal 28 ist ein Speisekanal. Über ihn wird im Betrieb Druckluft eingespeist, die über den zweiten Basiskanal 43 zuführbar ist. Der dritte Ventilkanal 29 letztlich ist ein Arbeitskanal, an den über den zugeordneten dritten Basiskanal 44 ein anzusteuernder Verbraucher, beispielsweise ein pneumatischer Antrieb, angeschlossen werden kann.

Wenngleich sich das Ventil 1 vor allem zur Steuerung von Druckluft eignet, kann es ohne weiteres auch zur Steuerung anderer gasförmiger Medien oder auch hydraulischer Medien eingesetzt werden.

In der Steuerkammer 21 befindet sich ein längliches, insbesondere balkenähnlich gestaltetes und beim Ausführungsbeispiel von einem Klappanker gebildetes Steuerglied 47. Es besitzt einen länglichen Grundkörper 48 mit ferromagnetischen Eigenschaften, der an seinem vorderen Endbereich mit einem zwischen den Ventilsitzen der ersten und zweiten Ventilöffnung 22, 23 liegenden Verschlusselement 51 bestückt ist. Im Bereich seiner Rückseite ist das Steuerglied 47 schwenkbeweglich gelagert, wobei die Schwenkachse in der zur Längsrichtung 15 und zur Höhenrichtung 13 rechtwinkeligen Breitenrichtung des Ventils 1 verläuft. Die auf diese Weise mögliche Schwenkbewegung des Steuergliedes 47 ist bei 52 durch einen Doppelpfeil markiert.

Eine in einer zur Abschlussfläche 20 offenen Aufnahmevertiefung 62 sitzende Rückstellfeder 63 beaufschlagt das Steuerglied 47 im Bereich seiner Vorderseite und drückt es im nicht aktivierten Zustand der Elektromagneteinheit 8 in eine nicht abgebildete Grundstellung, in der es mit seinem Verschlusselement 51 am Ventilsitz der zweiten Ventilöffnung 23 anliegt und diese dicht verschließt. Gleichzeitig ist dann die erste Ventilöffnung 22 freigegeben und somit eine fluidische Verbindung zwischen dem ersten und dritten Ventilkanal 27, 29 durch die Steuerkammer 21 hindurch geschaffen.

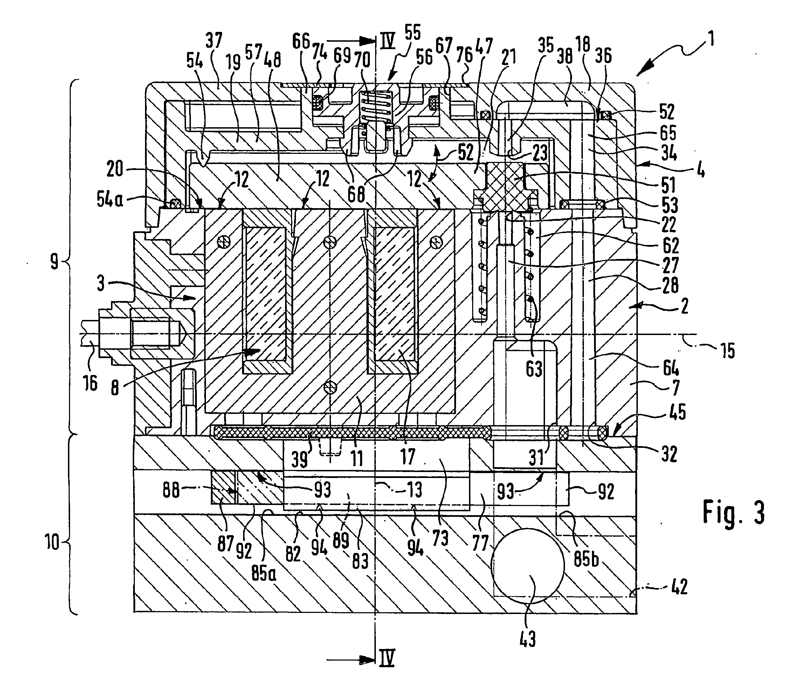

Wird die Elektromagneteinheit 8 durch Anlegen einer Spannung an die Anschlusskontakte 16 aktiviert, wird der sich über die Polflächen 12 hinweg erstreckende Grundkörper 48 angezogen und das Steuerglied 47 in die aus Figur 3 ersichtliche ausgelenkte Stellung verschwenkt. Hierbei ist dann die erste Ventilöffnung 22 durch das Verschlusselement 51 abgesperrt und gleichzeitig, wiederum über die Steuerkammer 21 hinweg, die Verbindung zwischen dem zweiten Ventilkanal 28 und dem dritten Ventilkanal 29 freigeschaltet. An dieser Stelle sei angemerkt, dass die dritte Ventilöffnung 26 in beiden Stellung des Steuergliedes 47 uneingeschränkt mit der Steuerkammer 21 kommuniziert.

Nach dem anschließenden Deaktivieren der Elektromagneteinheit 8 kehrt das steuerglied 57 aufgrund der Federkraft der Rückstellfeder 63 in die Grundstellung zurück.

Auf diese Weise kann mit dem Ventil 1 eine 3/2-Ventilfunktion realisiert werden.

Um die Schwenklagerung des Steuergliedes 47 zu realisieren, ist beim Ausführungsbeispiel ein mit dem Einsatzteil 19 einstückiger Lagerungsvorsprung 54 vorgesehen, der von der dem Antriebsteil 2 entgegengesetzten Seite her in die Steuerkammer 21 hineinragt und mit einem schneidenartigen Endabschnitt in eine Querrille des Grundkörpers 48 eingreift. An der entgegengesetzten Unterseite stützt sich der Grundkörper am Antriebsteil-Gehäuse 7 ab. Dabei ist ausreichend spiel vorhanden, um dem Steuerglied 47 die Schwenkbewegung 52 zu gestatten.

Während der erste und dritte Ventilkanal 27, 29 ausschließlich im Antriebsteil 2 verläuft, erstreckt sich der zweite Ventilkanal 28 in das Steuerteil 4 hinein, wobei er stirnseitig vor dem Steuerglied 47 an diesem vorbei nach oben verläuft, um dann eine Umlenkung bis hin zu der zweiten Ventilöffnung 23 zu erfahren. Die Kanalführung lässt sich hierbei durch Zusammenwirken von Abdeckhaube 18 und Einsatzteil 19 sehr einfach realisieren. Zur einfacheren Erläuterung dieses Umstandes sei im folgenden der im Antriebsteil 2 verlaufende Längenabschnitt des zweiten Ventilkanals 28 als Antriebsteilkanal 64 und der im Steuerteil 4 verlaufende Längenabschnitt als Steuerteilkanal 65 bezeichnet.

Das Einsatzteil 19 ist in seinem dem Steuerglied 47 vorgelagerten Wandabschnitt und in dem über dem Verschlusselement 51 liegenden Wandabschnitt von einem ersten bzw. zweiten Kanalast 34, 35 durchsetzt, der jeweils an der dem Antriebsteil 2 entgegengesetzten oberen Außenfläche 36 des Einsatzteils 19 ausmündet. Über beide Mündungen hinweg erstreckt sich eine in die Innenfläche der Bodenwand 37 der Abdeckhaube 18 eingebrachte Vertiefung 38, so dass die beiden Kanaläste 34, 35 über die vertiefung 38 hinweg miteinander verbunden sind. Eine die Vertiefung 38 umschließende Dichtung 52 schottet die Verbindung im Übergangsbereich zwischen der Abdeckhaube 18 und dem Einsatzteil 19 nach außen hin dicht ab.

Der erste Kanalast 34 mündet an der Unterseite des Einsatzteils 19 gegenüberliegend der Ausnehmung des Antriebsteilkanals 64. Der zweite Kanalast 35 endet mit der zweiten Ventilöffnung 23.

Weitere Dichtungen 53, 54a sind zwischen dem Antriebsteil und dem Einsatzteil 19 platziert, um den Übergang zwischen dem Antriebsteilkanal 64 und dem ersten Kanalast 34 des Steuerteilkanals 65 abzudichten und um die Steuerkammer 21 ringsum zum Innenraum der Abdeckhaube 18 hin abzudichten. Die Abdeckhaube 18 drückt mit ihrer dem Antriebsteil 2 entgegengesetzten Bodenwand 37 von oben her auf das Einsatzteil 19, das mithin unter Abdichtung fest an das Antriebsteil 2 angepresst ist.

Um bei einem Notfall oder zu Testzwecken auch bei nicht vorhandener Betätigungsspannung ein manuelles Auslenken des Steuergliedes 47 zu ermöglichen, ist das Ventil 1 mit einer hierzu geeigneten Handbetätigungseinrichtung 55 ausgestattet. Diese enthält beim Ausführungsbeispiel einen bevorzugt kolbenartig ausgebildeten Betätigungsknopf 56, der in einem Führungskragen 66 in der Höhenrichtung 13 verstellbar ist, welcher von der die Steuerkammer 21 an der dem Antriebsteil 2 entgegengesetzten Oberseite begrenzenden Bodenwand 57 des Einsatzteils 19 nach oben ragt. Dieser bevorzugt kreisförmig konturierte Führungskragen 66 taucht in eine komplementäre Durchbrechung 67 der Bodenwand 37 der Abdeckhaube 18 ein. Eine sich zwischen der Bodenwand 67 des Einsatzteils 19 und dem Betätigungsknopf 56 abstützende Druckfeder 70 drückt den Betätigungsknopf 56 ständig nach axial außen in die aus der Zeichnung hervorgehende unbetätigte Stellung. Nach axial innen ragende Rasthaken 68 durchgreifen die Bodenwand 57 des Einsatzteils 19 in die Steuerkammer 21 hinein, wobei sie diese Bodenwand 57 innen hintergreifen und dadurch den Betätigungsknopf 56 entgegen der Federkraft zurückhalten.

Die Rasthaken 68 liegen über der oberen Längsseite des steuergliedes 47. Wird von außen her mechanischer Druck auf den Betätigungsknopf 56 ausgeübt, verschiebt er sich in Richtung zum Antriebsteil 2, wobei er mit der Stirnfläche seiner Rasthaken 68 auf das Steuerglied 47 einwirkt und dieses aus der Grundstellung in die ausgelenkte Stellung überführt.

Über die von den Rasthaken 68 durchsetzten schlitzartigen Durchbrechungen der Bodenwand 57 des Einsatzteils 19 hindurch wirkt der in der Steuerkammer 21 herrschende Druck auch auf den Betätigungsknopf 56. Damit das Druckmedium nicht zur Atmosphäre entweichen kann, erstreckt sich um den Betätigungsknopf 56 herum zwischen diesem und dem Führungskragen 66 eine ringförmige Dichtung 69.

Um den Ventilkopf 9 an der Ventilbasis 10 zu fixieren, sind Befestigungsmittel vorgesehen, die mindestens einen U-förmigen Haltebügel 72 aufweisen. Dieser ist von der der Ventilbasis 10 entgegengesetzten Oberseite her mit seiner Öffnung voraus auf den Ventilkopf 9 aufgesetzt, so dass er diesen reiterartig übergreift. Die beiden Bügelschenkel 73 greifen auf einander entgegengesetzten Seiten außen seitlich am Ventilkopf 9 vorbei, wobei sie sich in der Höhenrichtung 13 des Ventils 1 erstrecken. Die die beiden Bügelschenkel 73 verbindende Bügelbasis 74 erstreckt sich quer über die Außenfläche der Bodenwand 37 der Abdeckhaube 18, an der sie anliegt. Die beiden der Bügelbasis 74 entgegengesetzten freien Endabschnitte 75 der Bügelschenkel 73 sind jeweils unter Zugvorspannung an der Ventilbasis 10 verankert, werden also durch die Verankerung in Richtung zur Ventilbasis 10 gezogen und mit ihnen der gesamte Haltebügel 72, der dabei mit seiner Bügelbasis 74 die der Ventilbasis 10 entgegengesetzte Außenseite des Ventilkopfes 9 beaufschlagt, so dass dieser mit der Ventilbasis 10 fest verspannt wird.

Bevorzugt erfolgt die Befestigung des Ventilkopfes 9 an der Ventilbasis 10 ausschließlich auf diese Weise. Dadurch erübrigt sich insbesondere der Einsatz von Befestigungsschrauben, die durch den Ventilkopf 9 hindurch geführt werden müssten und dessen nutzbares Volumen einschränken würden.

Prinzipiell könnte der Ventilkopf 9 mittels mehrerer, nebeneinander angeordneter Haltebügel 72 an der Ventilbasis 10 fixiert werden. Eine Mehrfachanordnung empfiehlt sich insbesondere bei relativ großer Baulänge des Ventils 1. In den meisten Fällen wird es jedoch ausreichend sein, auf einen einzigen Haltebügel 72 zurückzugreifen, der dann zweckmäßigerweise so platziert wird, dass er den Ventilkopf 9 im wesentlichen mittig übergreift. Dies ist beim Ausführungsbeispiel der Fall.

Hier ist der Haltebügel 72 bezüglich der Längsrichtung 15 mittig platziert, wobei sich die Bügelschenkel 73 in Höhenrichtung entlang der Längsseiten des Ventilkopfes 9 erstrekken. Um trotz Verwendung von nur einem Haltebügel 72 eine großflächig verteilte Kraftübertragung zu erzielen, ist der Haltebügel 72 bandartig flach gestaltet, was auch den Vorteil hat, dass er bezüglich der Außenfläche des Ventilkopfes 9 nur wenig aufträgt.

Ist ein bündiger Übergang zwischen der Außenfläche des Ventilkopfes 9 und derjenigen des Haltebügels 72 angestrebt, wie dies beim Ausführungsbeispiel der Fall ist, kann der Ventilkopf 9 eine sich quer über die obere und anschließend in Höhenrichtung entlang seinen beiden Außenflächen erstreckende Zentriervertiefung 76 aufweisen, in der der Haltebügel 72 bündig versenkt aufgenommen ist. Wegen der geringen Dicke des Haltebügels 72 ist hierbei eine minimale Tiefe der Zentriervertiefung 76 ausreichend, so dass das nutzbare Volumen des Ventilkopfes 9 praktisch nicht eingeschränkt wird.

Der Haltebügel 72 könnte prinzipiell aus Kunststoffmaterial bestehen. Vorgezogen wird jedoch eine Ausführung aus Metall, insbesondere Federstahl. Von Vorteil ist jedenfalls, wenn die Bügelschenkel 73 quer zu ihrer Längsrichtung aufeinander zu und voneinander weg federelastisch biegbar sind. Dies erleichtert das Aufstecken auf den Ventilkopf 9.

Es wäre denkbar, die Endabschnitte 75 der Bügelschenkel 73 und die Gestaltung der Ventilbasis 10 so aufeinander abzustimmen, dass die Bügelschenkel 73 ohne zusätzliche Bauteile direkt am Ventilkopf 9 verankerbar sind. Vorstellbar wäre hier beispielsweise eine Rast- oder Schnappverbindung. Beim Ausführungsbeispiel erfolgt die Verankerung allerdings unter zusätzlicher Verwendung gesonderter Spannelemente 77, was den Vorteil hat, dass trotz einfacher Montage hohe Spannkräfte ausgeübt werden können. Die Spannelemente 77 beaufschlagen die Endabschnitte 75 in einer mit der Höhenrichtung 13 zusammenfallenden, zur Ventilbasis 10 gerichteten Beaufschlagungsrichtung 78 und stützen sich dabei in entgegengesetzter Richtung an der Ventilbasis 10 ab.

Pro Bügelschenkel 73 ist ein Spannelement 77 vorhanden. Dieses ist, wie insbesondere auch aus Figuren 1 und 5 hervorgeht, bevorzugt stabartig ausgebildet. Es kann sich um einzelne, voneinander getrennte Stäbe handeln, die unabhängig voneinander handhabbar sind. Bevorzugt sind sie allerdings zu einer Baueinheit zusammengefasst, die zweckmäßigerweise einen U-förmigen Spannbügel 81 bildet. Die Schenkel des U-förmigen Spannbügels 81 repräsentieren dabei die beiden stabartigen Spannelemente 77.

Die Ventilbasis 10 besitzt unterhalb des Ventilkopfes 9 in Verlängerung der Seitenflächen desselben je eine seitlich, d.h. quer zur Längsrichtung der Bügelschenkel 73, offene Ausnehmung 82. In sie greift von der Seite her der Endabschnitt 75 des jeweils zugeordneten Bügelschenkels 73 ein. Dieser ist bevorzugt mehrfach abgewinkelt und besitzt einen rechtwinkelig zur Bügellängsrichtung ins Innere der Ausnehmung 82 hinein abgewinkelten Beaufschlagungsabschnitt 83 und einen sich daran anschließenden, erneut um 90° abgewinkelten und sich entgegengesetzt zur Beaufschlagungsrichtung 78 erstreckenden Abschlussabschnitt 84. Die Endabschnitte 75 der Bügelschenkel 73 sind also jeweils U-förmig abgewinkelt, wobei die U-Basis den Beaufschlagungsabschnitt 83 bildet.

Die Längsrichtung einer jeweiligen Ausnehmung 82 fällt mit der Breitenrichtung des Haltebügels 72 zusammen. Stirnseitig schließt sich an jede Ausnehmung 82 auf beiden Seiten je ein Aufnahmekanal 85a, 85b an, wobei die beiden einer jeweiligen Ausnehmung 82 zugeordneten Aufnahmekanäle 85a, 85b koaxial zueinander ausgerichtet sind. Wenigstens einer der Aufnahmekanäle 85a ist an der der Ausnehmung 82 entgegengesetzten Stirnseite offen und ermöglicht gemäß Pfeil 86 das Einstecken des zugeordneten Spannelementes 77.

Das Einstecken der beiden Spannelemente 77 ist beim Ausführungsbeispiel ein einheitlicher Einsteckvorgang des Spannbügels 81. Bei seinem Einstecken greifen die beiden Spannelemente 77 gleichzeitig in die beiden Durchgänge ein, die von jeweils zwei Aufnahmekanälen 85a, 85b und der dazwischen liegenden Ausnehmung 82 gebildet sind. Die Einstecktiefe wird durch die die beiden Spannelemente 77 verbindende Bügelbasis 87 des Spannbügels 81 begrenzt, die auf eine Begrenzungsfläche 88 der Ventilbasis 10 auftrifft. Bevorzugt liegt die Begrenzungsfläche 88 in der Einsteckrichtung 86 vertieft im Innern der Ventilbasis 10, so dass die Bügelbasis im eingesteckten Zustand des Spannbügels 81 vollständig versenkt im Innern der Ventilbasis 10 aufgenommen ist.

Die eingesteckten Spannelemente 77 durchgreifen mit ihrem die Ausnehmung 82 überbrückenden Längenabschnitt (Überbrückungsabschnitt 89), den jeweils zugeordneten, U-förmig gestalteten Endabschnitt 75 des betreffenden Bügelschenkels 73 und übergreifen dabei den diesem Endabschnitt 75 zugeordneten Beaufschlagungsabschnitt 83 an der dem Ventilkopf 9 zugewandten Seite.

Die sich beidseits an den Überbrückungsabschnitt 89 anschließenden Längenabschnitte (Abstützabschnitte 92) eines jeweiligen Spannelementes 77 befinden sich innerhalb des einen bzw. des anderen Aufnahmekanals 85a, 85b, wobei sie jeweils eine von der Wandung des betreffenden Aufnahmekanals 85a, 85b definierte, in der Beaufschlagungsrichtung 78 orientierte Abstützfläche 93 untergreifen.

Die erwähnten Komponenten sind nun so aufeinander abgestimmt, dass die sich an den Abstützflächen 93 entgegen der Beaufschlagungsrichtung 78 abstützenden Spannelemente 77 mit ihrem Überbrückungsabschnitt 89 in der Beaufschlagungsrichtung 78 auf den jeweils zugeordneten Beaufschlagungsabschnitt 83 mit Vorspannung einwirken und somit den gesamten Haltebügel 72 mit einer in der Beaufschlagungsrichtung 78 wirksamen Zugkraft beaufschlagen.

Um die Einsteckmontage der Spannelemente 77 zu erleichtern und um einen selbstständigen Ausgleich nicht vermeidbarer Herstellungstoleranzen zu ermöglichen, sind die Bügelschenkel 73 im Bereich ihrer Beaufschlagungsabschnitte 83 jeweils mit mehreren in der Breitenrichtung des Haltebügels 72 beabstandeten und entgegen der Beaufschlagungsrichtung 78 nach oben ausgestellten Erhebungen 94 versehen. Diese Erhebungen 94 können sehr einfach dadurch hergestellt werden, dass man in den Beaufschlagungsabschnitt 83 einen quer verlaufenden Schnitt einbringt und den sich daran anschließenden Bereich ähnlich einer Ausprägung nach oben drückt.

Somit wirkt der Überbrückungsabschnitt 89 nicht großflächig, sondern lokal verteilt an mehreren Stellen im Bereich der Erhebungen 94 auf den Beaufschlagungsabschnitt 83 ein. Die Nachgiebigkeit der Erhebungen 94 ermöglicht hierbei geringfügige Verformungen und mithin einen Toleranzausgleich, ohne Beeinträchtigung der Spannkraft.

Um eine optimale Abstützung zwischen den Abstützabschnitten 92 und den Abstützflächen 93 zu erreichen, sind die Abstützflächen 93 und die daran anliegenden längsseitigen Seitenflächen der Spannelemente 77 bevorzugt eben ausgebildet, mit einer rechtwinkelig zur Längsrichtung der Bügelschenkel 73 verlaufenden Ausdehnungsebene. Mit anderen Worten verläuft die Ausdehnungsebene rechtwinkelig zu der Beaufschlagungsrichtung 78. Diese Konstellation lässt sich sehr einfach dadurch realisieren, dass man die Aufnahmekanäle 85a, 85b und die stabartigen Spannelemente 77 mit rechteckigem Querschnitt ausführt.

Die Ausnehmungen 82 können zur Bestückungsfläche 45 hin ebenfalls offen sein. Dies erleichtert das Einführen bei der Montage, wenn der Ventilkopf 9 mit bereits aufgesetztem Haltebügel 72 in der Beaufschlagungsrichtung 78 an die Ventilbasis 10 angesetzt wird. Bei Bedarf kann sich jedoch die Abstützfläche 93 auch über die Ausnehmung 82 hinweg erstrecken. Die Querelastizität der Bügelschenkel 73 ermöglicht dennoch eine problemlose Montage.

Die Demontage des Ventilkopfes 9 geschieht durch Herausziehen des Spannbügels 81 aus der Ventilbasis 10 entgegengesetzt zur Einsteckrichtung 86. Hierzu kann mit einem Schiebewerkzeug durch einen oder beide den vorderen Abstützabschnitten 92 zugeordnete Aufnahmekanäle 85b hindurch eine Drückkraft auf eines oder beide Spannelemente 77 ausgeübt werden, um sie aus der Ventilbasis 10 bzw. aus dem Beaufschlagungseingriff mit den Bügelschenkeln 73 hinauszuschieben.

Aus Figuren 1 und 2 ist ersichtlich, dass sich der Haltebügel 72 bei entsprechender Breite sehr gut als Beschriftungsträger eignet. Er kann mit einer Beschriftung 95 versehen sein, die beispielsweise die Herkunft des Ventils angibt und/oder den Ventiltyp. Mithin kann der Haltebügel 72 ein gesondertes Typenschild ersetzen. Die Beschriftung wird zweckmäßigerweise vor dem Zusammenbau des Ventils 1 auf den Haltebügel 72 aufgebracht.

Insbesondere bei einer Metallausführung kann der Haltebügel 72 auch zu einer optimierten Abfuhr der im Betrieb der elektrischen Antriebseinrichtung 3 entstehenden Wärme beitragen..

Der Haltebügel 72 übergreift mit seiner Bügelbasis 74 den Betätigungsknopf 56 der Handbetätigungseinrichtung 55. Eine im Vergleich zum Querschnitt des Betätigungsknopfes 56 kleinere Durchbrechung 96 der Bügelbasis 74 gestattet jedoch weiterhin den Zugang zum Betätigungsknopf 56 zu Zwecken seiner Betätigung. Gleichzeitig bleibt aber der Betätigungsknopf 56 randseitig zumindest partiell von der Bügelbasis 74 übergriffen, so dass er sich von innen her an dieser Abstützen kann.

Die Abstützfunktion ist insofern relevant, als der Betätigungskopf 56 von innen her dem in der Steuerkammer 21 herrschenden Fluiddruck ausgesetzt ist und dadurch eine nach axial außen gerichtete fluidische Stellkraft erfährt. Der Haltebügel 72 hält mithin den Betätigungsknopf 56 in der von dem Führungskragen 66 umgrenzten Ausnehmung zurück, die bei abgenommenem Haltebügel 72 nach axial außen hin komplett offen ist.

Die Haltefunktion der Rasthaken 68 wird überwiegend nur für die Montage des Betätigungsknopfes 56 benötigt. Sie sorgt dafür, dass der Betätigungsknopf 56 nach dem Einsetzen und vor dem Anbringen des Haltebügels 72 nicht aufgrund der Feder 70 ausgeschoben wird. Für die Beaufschlagung des Steuergliedes 47 bei der Handbetätigung könnten anstelle der Rasthaken 68 auch ein oder mehrere beliebig gestaltete andere Beaufschlagungsabschnitte am Betätigungsknopf 56 vorgesehen sein.

Die Handbetätigungseinrichtung 55 ist sowohl für momentartige als auch für eine länger andauernde Betätigung ausgelegt. Bei der momentartigen Betätigung wird mit dem Finger einer Hand durch die Durchbrechung 96 hindurch eine Druckkraft auf den bevorzugt erhabenen Zentralabschnitt des Betätigungsknopfes 56 ausgeübt. Bei einer länger dauernden Betätigung setzt man zweckmäßigerweise ein in Figur 4 angedeutetes Betätigungswerkzeug 97 ein. Dieses hat einen an die Kontur der Durchbrechung 96 angepassten Betätigungsabschnitt 91, der in die Durchbrechung 96 einsteckbar ist, um den Betätigungsknopf 56 nach axial innen zu verschieben. Anschließend kann das Betätigungswerkzeug verdreht werden, so dass es mit mindestens einer Rampe 98 unter einen den Betätigungsknopf 56 übergreifenden Abschnitt 99 der Bügelbasis 74 greift und den Betätigungsknopf 56 in seiner betätigten Stellung arretiert. Die übergreifenden Abschnitte 99 sind beim Ausführungsbeispiel laschenartige Vorsprünge am Rand der Durchbrechung 96.

## Patentansprüche

1. Elektrisch betätigbares Ventil, insbesondere Magnetventil, mit einem mindestens ein bewegliches Steuerglied (47) mit zugeordneter elektrischer Antriebseinrichtung (3) aufweisenden Ventilkopf (9), der an eine von Basiskanälen (42, 43, 44) durchsetzte Ventilbasis (10) angesetzt und daran durch Befestigungsmittel fixiert ist, **dadurch gekennzeichnet, dass** die Befestigungsmittel mindestens einen U-förmigen Haltebügel (72) aufweisen, der den Ventilkopf (9) von der der Ventilbasis (10) entgegengesetzten Oberseite her reiterartig übergreift, wobei seine sich seitlich am Ventilkopf (9) vorbei erstreckenden Bügelschenkel (73) endseitig unter Vermittlung von bezüglich dem Haltebügel gesonderten Spannelementen (77) unter Zugvorspannung an der Ventilbasis (10) verankert sind, wobei die Spannelemente (77) an der Ventilbasis (10) abgestützt sind und die Endabschnitte (75) der Bügelschenkel (73) beaufschlagen.

2. Ventil nach Anspruch 1, **dadurch gekennzeichnet, dass** die Befestigungsmittel lediglich einen Haltebügel (72) aufweisen, der den Ventilkopf (9) im wesentlichen mittig übergreift.

3. Ventil nach Anspruch 1 oder 2, **dadurch gekennzeichnet, dass** der Haltebügel (72) bandartig mit bevorzugt flacher Gestalt ausgeführt ist.

4. Ventil nach einem der Ansprüche 1 bis 3, **dadurch gekennzeichnet, dass** die Bügelschenkel (73) quer zu ihrer Längsrichtung aufeinander zu und voneinander weg federelastisch biegbar sind.

5. Ventil nach einem der Ansprüche 1 bis 4, **dadurch gekennzeichnet, dass** der Haltebügel (72) aus Metall, insbesondere Federstahl, besteht.

6. Ventil nach einem der Ansprüche 1 bis 5, **dadurch gekennzeichnet, dass** der Haltebügel (72) versenkt in einer sich entlang der oberen und den seitlichen Außenflächen des Ventilkopfes (9) erstreckenden Zentriervertiefung (76) des Ventilkopfes (9) verläuft, wobei er zweckmäßigerweise mit den Außenflächen bündig versenkt ist.

7. Ventil nach einem der Ansprüche 1 bis 6, **dadurch gekennzeichnet, dass** der Ventilkopf (9) ausschließlich durch den mindestens einen Haltebügel (72) an der Ventilbasis (10) gehalten ist.

8. Ventil nach einem der Ansprüche 1 bis 7, **dadurch gekennzeichnet, dass** die Spannelemente (77) stabartig ausgebildet sind und an der Ventilbasis (10) vorgesehene Abstützflächen (93) an diesen anliegend untergreifen, wobei sie gleichzeitig an den Endabschnitten (75) der Bügelschenkel (73) vorgesehene Beaufschlagungsabschnitte (83), diese beaufschlagend, übergreifen.

9. Ventil nach Anspruch 8, **dadurch gekennzeichnet, dass** die Endabschnitte (75) der Bügelschenkel (73) des Haltebügels (72) zur Bildung der Beaufschlagungsabschnitte (83) ein- oder mehrfach abgewinkelt sind.

10. Ventil nach Anspruch 9, **dadurch gekennzeichnet, dass** die Endabschnitte (75) der Bügelschenkel (73) U-förmig abgewinkelt sind, wobei die Beaufschlagungsabschnitte (83) von der jeweiligen U-Basis gebildet sind.

11. Ventil nach Anspruch 9 oder 10, **dadurch gekennzeichnet, dass** die Endabschnitte (75) der Bügelschenkel (73) im Bereich der Beaufschlagungsabschnitte (83) jeweils mehrere nach oben ausgestellte Erhebungen (94) aufweisen, die von den stabartigen Spannelementen (77) beaufschlagt werden.

12. Ventil nach einem der Ansprüche 8 bis 11, **dadurch gekennzeichnet, dass** die Abstützflächen (93) und die daran anliegenden längsseitigen Seitenflächen der stabartigen Spannelemente (77) eben ausgebildet sind, wobei ihre Ausdehnungsebene jeweils rechtwinkelig zur Längsrichtung der Bügelschenkel (73) verläuft.

13. Ventil nach einem der Ansprüche 8 bis 12, **dadurch gekennzeichnet, dass** die stabartigen Spannelemente (77) einen rechteckigen Querschnitt aufweisen.

14. Ventil nach einem der Ansprüche 8 bis 13, **dadurch gekennzeichnet, dass** die stabartigen Spannelemente (77) von den beiden Schenkeln eines in die Ventilbasis (10) eingesteckten U-förmigen Spannbügels (81) gebildet sind.

15. Ventil nach einem der Ansprüche 8 bis 14, **dadurch gekennzeichnet, dass** jedes stabartige Spannelemente (77) in zwei durch eine Ausnehmung (82) voneinander getrennte, zueinander koaxiale Aufnahmekanäle (85a, 85b) der Ventilbasis (10) eingesteckt ist, wobei es die Ausnehmung (82) überbrückt und dabei den in die Ausnehmung (82) eintauchenden Endabschnitt (75) des zugeordneten Bügelschenkels (73) unter Beaufschlagung übergreift.

16. Ventil nach einem der Ansprüche 1 bis 15, **dadurch gekennzeichnet, dass** der Haltebügel (72) als Beschriftungsträger ausgebildet ist.

17. Ventil nach einem der Ansprüche 1 bis 16, **dadurch gekennzeichnet, dass** der Ventilkopf (9) im Bereich seiner Oberseite einen von dem Haltebügel (72) übergriffenen Betätigungsknopf (56) einer Handbetätigungseinrichtung (55) aufweist, wobei der Haltebügel (72) eine den Zugang zu dem Betätigungsknopf (56) ermöglichende Durchbrechung (96) aufweist, deren Querschnitt kleiner als derjenige des Betätigungsknopfes (56) ist, so dass sich dieser innen an dem Haltebügel (72) abstützen kann.

18. Ventil nach einem der Ansprüche 1 bis 17, **dadurch gekennzeichnet, dass** das Steuerglied (47) das als Klappanker ausgeführte Ventilglied eines Klappankerventils bildet, welches in einer im Bereich der der Ventilbasis (10) entgegengesetzten Seite im Innern des Ventilkopfes (9) befindlichen Steuerkammer (21) aufgenommen ist.

19. Ventil nach Anspruch 18, **dadurch gekennzeichnet, dass** der Ventilkopf (9) ein auf der Ventilbasis (10) sitzendes Antriebsteil (2) mit elektrischer Antriebseinrichtung (3) und eine darauf sitzende Abdeckhaube (18) aufweist, wobei die Abdeckhaube (18) ein gemeinsam mit dem Antriebsteil (2) die Steuerkammer (21) definierendes und zweckmäßigerweise auch mindestens einen Ventilkanal definierendes Einsatzteil (19) umschließt.

## Claims

1. Electrically operated valve, in particular solenoid valve, with a valve head (9) comprising at least one movable control member (47) with an associated electric drive unit (3), which valve head (9) is mounted on a valve base (10) through which base passages (42, 43, 44) pass and which is attached thereto by fastening means, **characterised in that** the fastening means comprise at least one U-shaped retaining bracket (72) which covers the valve head (9) in the manner of a rider from the top side opposite the valve base (10), wherein its bracket legs (73) extending laterally past the valve head (9) are anchored at the ends to the valve base (10) by clamping elements (77) which are separate from the retaining bracket while being subjected to a tensile preload, the clamping elements (77) being supported on the valve base (10) and acting on the end sections (75) of the bracket legs (73).

2. Valve according to claim 1, **characterised in that** the fastening means comprise only one retaining bracket (72) which covers the valve head (9) substantially centrally.

3. Valve according to claim 1 or 2, **characterised in that** the retaining bracket (72) is designed as a strip with a preferably flat shape.

4. Valve according to any of claims 1 to 3, **characterised in that** the bracket legs (73) can be bent resiliently towards and away from each other at right angles to their longitudinal direction.

5. Valve according to any of claims 1 to 4, **characterised in that** the retaining bracket (72) is made of metal, in particular of spring steel.

6. Valve according to any of claims 1 to 5, **characterised in that** the retaining bracket (72) is recessed in a centring recess (76) of the valve head (9) which extends
along the upper and lateral outer surfaces of the valve head (9), being expediently flush with the outer surfaces.

7. Valve according to any of claims 1 to 6, **characterised in that** the valve head (9) is held to the valve base (10) by the at least one retaining bracket (72) only.

8. Valve according to any of claims 1 to 7, **characterised in that** the clamping elements (77) are bar-shaped and engage support surfaces (93) provided on the valve base (10) from below while bearing against them, while simultaneously overlapping and pressurising pressurisation sections (83) provided on the end sections (75) of the bracket legs (73).

9. Valve according to claim 8, **characterised in that** the end sections (75) of the bracket legs (73) of the retaining bracket (72) are angled once or more to form the pressurisation sections (83).

10. Valve according to claim 9, **characterised in that** the end sections (75) of the bracket legs (73) are U-shaped, the pressurisation sections (83) being represented by the respective U-base.

11. Valve according to claim 9 or 10, **characterised in that** the end sections (75) of the bracket legs (73) have several upward-extending high spots (94) in the region of the pressurisation sections (83), which are pressurised by the bar-shaped clamping elements (77).

12. Valve according to any of claims 8 to 11, **characterised in that** the support surfaces (93) and the lateral surfaces of the bar-shaped clamping elements (77) which bear against them are flat, their dimensional planes extending at right angles to the longitudinal direction of the bracket legs (73).

13. Valve according to any of claims 8 to 12, **characterised in that** the bar-shaped clamping elements (77) have a rectangular cross-section.

14. Valve according to any of claims 8 to 13, **characterised in that** the bar-shaped clamping elements (77) are represented by the two legs of a U-shaped clip (81) inserted into the valve base (10).

15. Valve according to any of claims 8 to 14, **characterised in that** each of the bar-shaped clamping elements (77) is inserted into two mutually coaxial receiving channels (85a, 85b) of the valve base (10) which are separated by a recess (82), wherein it bridges the recess (82) while pressurising and overlapping the end section (75) of the associated bracket leg (73) which dips into the recess (82).

16. Valve according to any of claims 1 to 15, **characterised in that** the retaining bracket (72) is designed to carry lettering.

17. Valve according to any of claims 1 to 16, **characterised in that** the valve head (9) is provided in the region of its top side with a control button (56) of a manual operating device (55) which is covered by the retaining bracket (72), the retaining bracket (72) having an opening (96) allowing access to the control button (56), its cross-section being smaller than that of the control button (56), so that the latter can be supported inside on the retaining bracket (72).

18. Valve according to any of claims 1 to 17, **characterised in that** the control member (47) forms the valve member designed as a hinged armature of a hinged armature valve which is accommodated in a control chamber (21) located in the interior of the valve head (9) in the region of the side opposite the valve base (10).

19. Valve according to claim 18, **characterised in that** the valve head (9) comprises a drive part (2) mounted on the valve base (10) and comprising an electric drive unit (3) and a covering hood (18) mounted thereon, wherein the covering hood (18) encloses an insert part (19) defining, together with the drive part (2), the control chamber (21) and expediently also defining at least one valve passage.

## Revendications

1. Vanne à commande électrique, en particulier vanne magnétique, comportant une tête de vanne (9), qui est munie d'au moins un organe de commande (47) mobile avec un dispositif d'entraînement (3) électrique associé, et qui est montée sur une base (10) de la vanne, traversée par des conduits de base (42, 43, 44), et est fixée à celle-ci par des moyens de fixation, **caractérisée en ce que** les moyens de fixation comportent au moins un étrier de fixation (72) en forme de U qui, à la manière d'un cavalier, enserre par le dessus la tête de vanne (9) depuis la face supérieure opposée à la base (10) de la vanne, sachant que les branches (73) de l'étrier, qui s'étendent latéralement le long de la tête de vanne (9), sont ancrées du côté des extrémités dans la base (10) moyennant une précontrainte de traction par l'intermédiaire d'éléments de serrage (77) séparés de l'étrier de fixation, lesdits éléments de serrage (77) prenant appui sur la base (10) de la vanne et sollicitant les zones d'extrémité (75) des branches (73) de l'étrier.

2. Vanne selon la revendication 1, **caractérisée en ce que** les moyens de fixation comportent uniquement un étrier de fixation (72) qui enserre par le dessus la tête de vanne (9) sensiblement au milieu.

3. Vanne selon la revendication 1 ou 2, **caractérisée en ce que** l'étrier de fixation (72) est conçu en forme de bande avec une forme de préférence plate.

4. Vanne selon l'une quelconque des revendications 1 à 3, **caractérisée en ce que** les branches (73) de l'étrier sont élastiquement flexibles transversalement à leur direction longitudinale l'une vers l'autre et l'une en s'écartant de l'autre.

5. Vanne selon l'une quelconque des revendications 1 à 4, **caractérisée en ce que** l'étrier de fixation (72) est réalisé en métal, en particulier en acier à ressort.

6. Vanne selon l'une quelconque des revendications 1 à 5, **caractérisée en ce que** l'étrier de fixation (72) s'étend en étant enfoncé dans un creux de centrage (76) de la tête de vanne (9), lequel s'étend le long des faces extérieures supérieure et latérales de la tête de vanne (9), sachant que, de manière judicieuse, ledit étrier de fixation est enfoncé à fleur des faces extérieures.

7. Vanne selon l'une quelconque des revendications 1 à 6, **caractérisée en ce que** la tête de vanne (9) est maintenue sur la base (10) de la vanne exclusivement par ledit au moins un étrier de fixation (72).

8. Vanne selon l'une quelconque des revendications 1 à 7, **caractérisée en ce que** les éléments de serrage (77) sont réalisés en forme de tiges et enserrent par le dessous les surfaces d'appui (93), prévues sur la base (10), en prenant appui contre celles-ci, sachant qu'ils enserrent en même temps par le dessous, en les sollicitant, des zones de sollicitation (83) prévues sur les zones d'extrémité (75) des branches (73) de l'étrier.

9. Vanne selon la revendication 8, **caractérisée ce que** les zones d'extrémité (75) des branches (73) de l'étrier de fixation (72) sont pliées une ou plusieurs fois pour former des zones de sollicitation (83).

10. Vanne selon la revendication 9, **caractérisée en ce que** les zones d'extrémité (75) des branches (73) de l'étrier sont pliées en forme de U, les zones de sollicitation (83) étant formées par la base du U respectif.

11. Vanne selon la revendication 9 ou 10, **caractérisée en ce que** les zones d'extrémité (75) des branches (73) de l'étrier comportent, dans la région des zones de sollicitation (83), chacune plusieurs protubérances (94) redressées vers le haut, qui sont sollicitées par les éléments de serrage (77) en forme de tiges.

12. Vanne selon l'une quelconque des revendications 8 à 11, **caractérisée en ce que** les surfaces d'appui (93) et les faces latérales allongées, en appui contre ces dernières, des éléments de serrage (77) en forme de tiges sont planes, leur plan d'extension étant orienté perpendiculairement à la direction longitudinale des branches (73) de l'étrier.

13. Vanne selon l'une quelconque des revendications 8 à 12, **caractérisée en ce que** les éléments de serrage (77) en forme de tiges ont une section rectangulaire.

14. Vanne selon l'une quelconque des revendications 8 à 13, **caractérisée en ce que** les éléments de serrage (77) en forme de tiges sont formés par les deux branches d'un étrier de serrage (81) en forme de U, enfiché dans la base (10) de la vanne.

15. Vanne selon l'une quelconque des revendications 8 à 14, **caractérisée en ce que** chaque élément de serrage (77) en forme de tige est enfiché dans deux conduits de réception (85a, 85b) de la base (10) de la vanne, lesquels sont disposés coaxialement l'un à l'autre et séparés l'un de l'autre par un évidement (82), ledit élément de serrage couvrant l'évidement (82) et enserrant par le dessus moyennant une sollicitation la zone d'extrémité (75), pénétrant dans l'évidement (82), de la branche (73) de l'étrier.

16. Vanne selon l'une quelconque des revendications 1 à 15, **caractérisée en ce que** l'étrier de fixation (72) est réalisé sous la forme d'un support d'étiquetage.

17. Vanne selon l'une quelconque des revendications 1 à 16, **caractérisée en ce que** la tête de vanne (9), dans la zone de sa face supérieure, comporte un bouton d'actionnement (56) d'un dispositif d'actionnement manuel (55), enserré par le dessus par l'étrier de fixation (72), l'étrier de fixation (72) comportant un trou débouchant (96), qui permet d'accéder au bouton d'actionnement (56) et dont la section est inférieure à celle du bouton d'actionnement (56), de telle sorte que celui-ci peut prendre appui à l'intérieur contre l'étrier de fixation (72).

18. Vanne selon l'une quelconque des revendications 1 à 17, **caractérisée en ce que** l'organe de commande (47) forme l'organe de la vanne, réalisé sous forme d'armature mobile, d'une vanne à armature mobile, lequel est logé dans une chambre de commande (21), située à l'intérieur de la tête de vanne (9) dans la zone du côté opposé à la base (10) de la vanne.

19. Vanne selon la revendication 18, **caractérisée en ce que** la tête de vanne (9) comporte une partie d'entraînement (2), en appui sur la base (10) de la vanne et munie d'un dispositif d'entraînement (3) électrique, et un couvercle de protection (18) en appui sur ce dernier, ledit couvercle de protection (18) entourant un insert (19) qui, conjointement avec la partie d'entraînement (2), définit la chambre de commande (21) et, de manière judicieuse, définit également au moins un conduit de la vanne.
